# EUROPÄISCHE PATENTSCHRIFT

(11) **EP 3 340 072 B1**
(45) Veröffentlichungstag und Bekanntmachung des Hinweises auf die Patenterteilung: **17.02.2021**
(21) Anmeldenummer: 16206711.0
(22) Anmeldetag: 23.12.2016
(51) Int. Cl.: G06F 16/951

(54) **VERFAHREN ZUR DURCHFÜHRUNG EINER SELBSTTÄTIGEN DATENABFRAGE UND PROGRAMMPRODUKT**
METHOD FOR PERFORMING AN AUTOMATIC REQUEST FOR DATA AND PROGRAM PRODUCT
PROCÉDÉ D'EXÉCUTION D'UNE DEMANDE DE DONNÉES AUTOMATIQUE ET PRODUIT-PROGRAMME

(43) Veröffentlichungstag der Anmeldung: 27.06.2018
(73) Patentinhaber: Solute GmbH, 76185 Karlsruhe (DE)
(72) Erfinder: Petersen, Lorenz, 67480 Roeschwoog (FR); Bach, Gunter, 76356 Weingarten (DE)
(74) Vertreter: Patent- und Rechtsanwälte Ullrich & Naumann

(56) Entgegenhaltungen:
- US-A1- 2012 054 669
- US-A1- 2015 039 995
- Gian Wild: "Making Accessible Links: 15 Golden Rules For Developers", Sitepoint.com, 20. Februar 2014 (2014-02-20), XP055376734, Gefunden im Internet: URL:https://web.archive.org/web/2014022116 2746/https://www.sitepoint.com/15-rules-ma king-accessible-links/ [gefunden am 2017-05-29]

## Beschreibung

Die vorliegende Erfindung betrifft ein Verfahren zur Durchführung einer selbsttätigen Datenabfrage zu in einem Datenfeld einer relevanten Programminstanz auf einem Datenverarbeitungsgerät enthaltenen Daten, bei dem eine Internetadresse innerhalb des Datenfelds einer auf dem Datenverarbeitungsgerät ausgeführten Programminstanz erfasst und an eine Suchroutine übermittelt wird, woraufhin die Suchroutine aufgrund der Internetadresse eine oder mehrere mit den Daten des Datenfelds korrespondierende selbsttätige Datenabfragen durchführt und die Ergebnisse dieser einen oder mehreren Datenabfragen in einem hierfür bestimmten Bildschirmbereich darstellt, sowie ein Programmprodukt zur Durchführung eines solchen Verfahrens.

Derartige Verfahren, manifestiert in den genannten Programmprodukten, sind bereits seit Längerem im Einsatz. Im Wesentlichen arbeiten sie damit, im Falle einer Websuche nach einem Produktangebot die Eingabe in den Browser mitzulesen und zu dem Gegenstand des Sprungziels eine eigene Internetrecherche, sei es auf zuvor ausgewählten Angebotsseiten oder in eigenen Datenbanken, durchzuführen. Die eigenen Treffer werden dann mit dem vom Benutzer selbst aufgerufenen Angebot verglichen und diesem die Alternativangebote unterbreitet.

Die US 2012/054669 A1 offenbart ein System und ein Verfahren zum Bereitstellen eines Benutzer-Interfaces für das Web-Browsen. Ein Browser-Add-on liest die in den Browser eingegebene URL aus und bezieht aus Datenbanken und Internet-Ressourcen Zusatzinformationen. Die Zusatzinformationen werden in einem Slider-Fenster dargestellt.

Die US 2015/0039995 A1 beschreibt ein Verfahren zur Darstellung kontextrelevanter Zusatzinformationen im Zusammenhang mit einer Webseite. Hierzu wird ein Proxy oder ein Gateway installiert, der über das Netzwerk ausgetauschte Daten analysiert. Bei Nutzung eines Proxys werden Daten einer Webseite gepuffert und nach dem Vorhandensein eines Produkts durchsucht. Wenn ein Produkt gefunden wird, werden Zusatzinformationen abgefragt und dem Nutzer als Benachrichtigung dargestellt.

Der Artikel von Gian Wild: "Making Accessible Links: 15 Golden Rules for Developers", der auf der Webseite sitepoint.com veröffentlicht worden ist, enthält Hinweise, wie Hyperlinks für eine universelle Nutzung sinnvoll gesetzt werden können.

Zahlreiche Einkäufe werden mittlerweile über das Internet erledigt, wobei das Produktsortiment mittlerweile weit über das Sortiment klassischer Versandhändler hinausgeht. Die Vielzahl an Anbietern verschafft dem Kunden hierbei einerseits eine nie dagewesene Auswahl an Waren und Dienstleistungen, stellt ihn aber andererseits vor das Problem, Preise umfassend zu vergleichen. Das Anstellen von Preisvergleichen ist damit ein interessantes Geschäftsfeld, das dem Benutzer einen sofort spürbaren Nutzen und den beteiligten Unternehmen Aufmerksamkeit für deren Angebote bringt.

Allerdings spielt neben dem Wunsch des Benutzers nach Komfort bei der Internetsuche paradoxerweise gleichzeitig der Wunsch nach Datensicherheit eine zunehmend große Rolle, wobei diese beiden Wünsche zueinander als nahezu komplementär angesehen werden müssen. Beispielsweise wird das bisher mögliche Auslesen der eingegebenen Internetadresse aus der Suchhistorie des Browsers mit neueren Systemversionen aus Sicherheitsüberlegungen heraus verunmöglicht, so dass in diesem Fall das bisherige Vorgehen nicht mehr zur Verfügung steht.

Vor diesem Hintergrund liegt der vorliegenden Erfindung die Aufgabe zu Grunde, ein Verfahren zur Durchführung einer selbsttätigen Datenabfrage bereitzustellen, welches den Sicherheitsanforderungen der Benutzer gerecht wird und trotz der gegebenen Einschränkungen die Anforderungen an die Funktionalität erfüllt.

Dies gelingt durch ein Verfahren gemäß den Merkmalen des Anspruchs 1, sowie durch ein Programmprodukt für Datenverarbeitungsgeräte, welches dieses Verfahren umsetzt gemäß den Merkmalen des nebengeordneten Anspruchs 12. Sinnvolle Weiterbildungen des Verfahrens und des Programmprodukts können den jeweiligen Unteransprüchen entnommen werden.

Erfindungsgemäß ist es weiterhin das Ziel, aus einem Datenfeld einer relevanten Programminstanz eine Internetadresse auszulesen um eine parallele Suche nach demselben Produkt durchzuführen und dem Benutzer Informationen in Form alternativer Angebote und/oder ergänzender Daten wie Kundenmeinungen, technische

Daten und ähnliches vorzulegen. Hierzu bedient sich das Verfahren dem Umstand, dass ein Auslesen von Fensterinhalten auch durch Funktionen der systemeigenen Bedienungshilfen erfolgen muss. Personen, die aus welchen Gründen auch immer Leseschwächen haben, können vom Betriebssystem eines Datenverarbeitungsgeräts regelmäßig Unterstützung dadurch erhalten, dass Fensterinhalte vergrößert oder insbesondere vorgelesen werden. Der Zugriff der Bedienungshilfefunktionen auf die Fensterinhalte kann dabei auf unterschiedliche Art erfolgen, die abhängig vom verwendeten Betriebssystem unterschiedliche Ansätze verfolgen, wie etwa eine OCR-Erkennung, das Auslesen von Texten über hierfür vorgesehene Frameworks und APIs und weitere Möglichkeiten. In jedem Fall aber sind Bedienungshilfefunktionen implementiert, welche Fensterinhalte, zum Beispiel als Textstring, zurückgeben, die dann einer weiteren Analyse und Verarbeitung zugeführt werden können. Alle derartigen Bedienungshilfefunktionen sind von der Erfindung ausdrücklich umfasst, umgekehrt umfassen die Bedienungshilfefunktionen im Sinne der Erfindungen auch alle mit vergleichbarer Funktionalität ausgestatteten anderweitigen Systemschnittstellen.

In diesem Zusammenhang sieht die Erfindung daher vor, dass der Benutzer auf seinem Datenverarbeitungsgerät in einem Datenfeld einer Programminstanz eine Eingabe vornimmt, vorzugsweise, aber nicht ausschließlich, um eine Suche zu starten. Alternativ können auch andere Datenfelder, in denen keine Eingabe des Benutzers erfolgt, aber Produktinformationen gespeichert sind, eine solche Suche auslösen. Ohne dass der Benutzer in seinem gewohnten Ablauf beeinträchtigt oder gestört wird, wird nach dem erfindungsgemäßen Verfahren seine Eingabe von einer Bedienungshilfefunktion ausgelesen, welche im Idealfall eine sofort einsetzbare Internetadresse, also eine URL, zurückgibt. Da manche Programme, insbesondere manche Browser, mit Vereinfachungen arbeiten, so genannten User Experience Funktionen, können Internetadressen teilweise zur besseren Lesbarkeit auch durch das Weglassen von Adressbestandteilen wie "http://" oder "https://" sowie "www." verkürzt sein. Solche Verkürzungen sind teilweise nicht ohne Weiteres zu beheben, so dass dies entweder von der Suchroutine berücksichtigt werden kann oder zusätzliche Maßnahmen ergriffen werden müssen, um die Suchfenster zu einer geeigneten Wiedergabe der Internetadresse zu bringen.

Die so ermittelte Internetadresse ist Gegenstand einer selbsttätigen Datenabfrage, indem zunächst das Ziel dieser Adresse analysiert und anhand der auf der Zielseite aufgefundenen Informationen wie etwa der Marke, der Produktbezeichnung, des Preises oder der Artikelnummer eine zusätzliche Datenabfrage formuliert wird. Die Durchführung dieser zusätzlichen Datenabfrage ist Gegenstand einer hierfür vorgesehenen Suchroutine, die nicht Gegenstand der vorliegenden Erfindung ist und daher auch an dieser Stelle nicht weiter behandelt wird.

Die Suchroutine gibt ihre Suchtreffer zurück, die mit dem Suchergebnis des Benutzers verglichen werden um diesem alternative Kaufmöglichkeiten aufzuzeigen. Soweit niedrigere Preise aufgefunden werden, wird auch dies kenntlich gemacht, weitere Informationen wie etwa Versandkosten, Kundenbewertungen oder Verfügbarkeit der Ware können ebenfalls angezeigt werden.

Um dennoch den Sicherheitsanforderungen zu genügen kann bedarfsweise der Zugriff auf die Bedienungshilfefunktionen bei der Installation der Prozessanwendung oder deren erster Inbetriebnahme abgefragt werden, so dass in einem solchen Fall die Abfrage durch den Benutzer ausdrücklich autorisiert werden müsste. Insbesondere bei den aktuellen Betriebssystemen für Mobilgeräte sind solche Abfragen der Freigabe von Funktionen bereits üblich.

Auf diese Weise ist ein Verfahren implementiert, das trotz der neueren Einschränkungen hinsichtlich der Datensicherheit eine auf lange Sicht funktionale Lösung darstellt und für den Benutzer keine Einschränkungen im täglichen Gebrauch mit sich bringt.

In der Regel läuft die Suchroutine auf einem über das Internet mit dem Datenverarbeitungsgerät verbundenen Server ab. Durch eine Zwischenspeicherung von Suchergebnissen in einer Datenbank des Servers, welcher von Angebotsseiten auch aktiv aktualisiert werden kann, können Ergebnisse schnell und mit wenig Datenverkehr ermittelt werden. Alternativ ist es auch möglich, eine selbsttätige Produktsuche direkt von dem Datenverarbeitungsgerät aus durchzuführen.

Bei der Darstellung der Suchergebnisse steht im Vordergrund, den Benutzer nicht zu stören, sondern ihm nur die Informationen zu geben, die er wünscht und benötigt. Dies soll auch auf eine Art und Weise geschehen, dass der Benutzer sich von der zusätzlichen Information nicht gestört fühlt. Insbesondere ist daher vorgesehen, die Ergebnisse der selbsttätigen Datenabfragen in einem so genannten Overlay aufzubereiten, in dem die wichtigsten Informationen wiedergegeben werden. Das Overlay wird stets im Vordergrund des Bildschirms angezeigt, so dass es nicht durch andere Fenster oder Programme verdeckt werden kann und auch bei Aufruf eines anderen Fensters im Vollbildmodus angezeigt werden kann. Dabei kann das Overlay insbesondere in Größe, Form und Lage an die Bedürfnisse des Benutzers anpassbar und durch diesen konfigurierbar gestaltet sein.

Insbesondere bei einer Systemarchitektur wie bei Betriebssystemen wie Microsoft Windows kann es sinnvoll sein, die Prozessanwendung mit verschiedenen parallel laufenden Threads zu konzipieren. Ein Prozessüberwachungsthread kann dann die geöffneten Fenster, also Instanzen laufender Applikationen, überprüfen und feststellen, welche der Fenster relevante Programminstanzen im Sinne der Erfindung sind.

Um relevante Programminstanzen im Sinne der Erfindung handelt es sich insbesondere bei Browserfenstern und bei Instanzen von speziellen Shopping-Apps, also Suchmaschinen-Applikationen, die speziell für den Einkauf von Waren und Dienstleistungen vorgesehen sind. Während eine Browser-Instanz über Informationen des Betriebssystems als solche identifizierbar ist, kann es erforderlich und sinnvoll sein, die Suchmaschinen-Applikationen vom Benutzer vorgeben oder ausschließen zu lassen, auch um eine Beschränkung der Suchen auf die vom Benutzer wirklich gewünschten Anwendungen zu realisieren. Entsprechend ist es ferner sinnvoll, wenn der Benutzer auch bestimmte Browser von der Beachtung durch die Prozessanwendung explizit ausschließen kann.

Sobald der Prozessüberwachungsthread eine relevante Programminstanz ermittelt, wird er einen Beobachtungsthread starten, welcher das betreffende Fenster überwacht und die Eingabe von Internetadressen in ein Datenfeld des Fensters detektiert. Im Falle mehrerer geöffneter relevanter Programminstanzen wird der Prozessüberwachungsthread folglich auch mehrere Beobachtungsthreads starten, welche jeweils die von ihnen erfassten Internetadressen an einen Verarbeitungsthread übergeben. Das Auslesen des wenigstens einen Datenfelds einer relevanten Programminstanz kann in regelmäßigen oder unregelmäßigen Abständen erfolgen. Es kann hierbei beispielsweise sinnvoll sein, jeweils nur das aktive Fenster zu beobachten und regelmäßig auszulesen, da nur in einem aktiven Fenster eine Veränderung durch den Benutzer stattfinden kann. Ferner kann bei jedem Neustart und jedem Aktivieren oder Deaktivieren eines Fensters erneut ausgelesen werden.

Zum Auslesen des wenigstens einen Datenfelds einer relevanten Programminstanz greift der Beobachtungsthread auf die Bedienungshilfefunktionen des Betriebssystems zurück, welche dem Beobachtungsthread die in dem Datenfeld aufgefundenen Textelemente zurückliefert. Diese ausgelesenen Textelemente in Form einer Internetadresse übermittelt der Beobachtungsthread dann dem Verarbeitungsthread.

Der Verarbeitungsthread interpretiert die Internetadresse und startet die Suchroutine, sofern sich die Internetadresse von früheren Internetadressen unterscheidet. Durch eine in regelmäßigen Abständen ausgelesene Eingabe kann eine Internetadresse mehrfach ausgelesen werden, so dass unnötige Suchen vermieden werden sollten. Liegt die Suche zu lange zurück, kann sie jedoch dennoch wiederholt werden. Insbesondere nach einem Neustart der Prozessanwendung wird dies regelmäßig der Fall sein.

Von der Suchroutine, die auf dem Datenverarbeitungsgerät selbst, oder auch auf einem über das Internet mit dem Datenverarbeitungsgerät verbundenen Server stattfinden kann, erhält der Verarbeitungsthread die Suchergebnisse zurück und vergleicht diese mit dem vom Benutzer aufgerufenen Angebot. Der Verarbeitungsthread wird die so erhaltenen Informationen für den Benutzer aufarbeiten und ihm diese über das oben beschriebene Overlay anzeigen und ihm vorzugsweise auch die Möglichkeit geben, die in der selbsttätigen Datenabfrage aufgefundenen Treffer seinerseits in einem Browser oder einer separaten Anwendung aufzurufen. Alternativ kann die Aufbereitung der erhaltenen Informationen auch bei dem Server stattfinden.

Für die Bedienungshilfefunktionen sehen die verschiedenen Betriebssysteme eigene Funktionen vor, welche bei verschiedenen Programmversionen der Prozessanwendung berücksichtigt werden müssen. Insbesondere eignen sich bei dem verbreiteten Microsoft Windows zwei Herangehensweisen besonders für den angestrebten Erfolg. Zum Einen kann der Beobachtungsthread hier auf die Microsoft Active Accessibility zurückgreifen, um die Internetadresse auszulesen., zum anderen eignet sich das Microsoft UI Automation .NET Framework.

Mit Tools aus dem Windows SDK können Informationen beider Frameworks praktisch in Form einer Baumstruktur ermittelt werden. Anwendungen, welche die Microsoft Active Accessibility API (MSAA) unterstützen, bieten MSAA-Clients die Möglichkeit, eine Hierarchie von Objekten zu durchlaufen. Die Objekte haben Eigenschaften, darunter Rollen und Werte. Die Rollen bilden die zur Einführung von MSAA üblichen Elemente grafischer Nutzeroberflächen ab. Es gibt dort allerdings keine speziellen Rollen für Internetadressen, Browser-URLs stehen in Objekten der Rolle "AccessibleRole.Text". Durch die Verwendung einer URL-Erkennung werden Texte, die keine Internetadressen sind, ausgeblendet. Die hierfür erforderlichen Funktionen sind aber Stand der Technik und hier nicht weiter von Interesse.

Alternativ kann das Microsoft User Interface Automation .NET Framework verwendet werden. Die zugehörige Baumstruktur kann in einfacher Art und Weise durchsucht werden. Da nicht alle Elemente dort abgefragt werden können, ist es sinnvoll, zusätzlich die .COM-Variante des UI Automation API zu durchsuchen. Dies allerdings ebenfalls mit der gleichen Einschränkung.

Eine gezielte Suche der Internetadressen ist zudem schwierig, weil sich über Versionen und zwischen den einzelnen Browsern die Fundstellen ändern. Ein vollständiges Durchsuchen der Baumstrukturen ist zu aufwändig und zeitintensiv. Als Mittelweg stellt sich eine Lösung als sinnvoll dar, bei der die Baumstrukturen beide innerhalb eines Teilbaums solange durchsucht werden, bis eine gültige Internetadresse gefunden wird. Danach wird die Suche abgebrochen und die aufgefundene Internetadresse verwendet.

Im Fall von Betriebssystemen für mobile Datenverarbeitungsgeräte, etwa Android-Systemen, wird auf einen Bedienungshilfedienst zurückgegriffen, der die eingegebene Internetadresse aus Datenfeldern wie Fenstertiteln, Datenfeldern etc. zurückliefert. Gegebenenfalls könnte auch ein OCR-Verfahren eingesetzt werden, also eine Schrifterkennung, mit der die Bedienungshilfen die schriftbildlichen Elemente einer Seite erfassen. In diesem Fall könnte ferner eine Begrenzung des Texterkennungsfeldes hierbei vorgegeben werden, um das Auslesen zu beschleunigen.

Das Verfahren kann sich insbesondere als Programmprodukt manifestieren, welches das erfindungsgemäße Verfahren umsetzt. Hierbei kann ein solches Programmprodukt entweder als Software Development Kit (SDK) oder als eigenständiges Programmprodukt konzipiert sein.

Das Programmprodukt kann mit besonderem Vorteil auch als Softwareentwicklungsmodul für ein SDK konzipiert sein, welches auf eigene Suchroutinen verzichtet und ein Interface zur Übergabe von Suchparametern, insbesondere von ausgelesenen Internetadressen, bereitstellt. Dadurch kann eine so genannte Whitelabel-Anwendung, welche für verschiedene Anbieter mit deren Corporate Identity anpassbar ist, und auch eine technisch konfigurierbare und skalierbare Version des Programms angeboten werden. Auch das Nutzerinterface kann in diesem Zusammenhang optisch und technisch anpassbar gestaltet werden.

Das Programmprodukt, sofern als Softwareentwicklungsmodul ausgestaltet, beliefert eine separate Suchroutine, so dass es die ausgelesenen Internetadressen zur weiteren Verarbeitung in eine Datenbank einträgt, als Text ausgibt oder bedarfsweise auch selbst Datenabfragen im Internet durchführt.

Die vorstehend beschriebene Erfindung wird im Folgenden anhand eines Ausführungsbeispiels näher erläutert.

### Es zeigen

- Figur 1: eine schematische Darstellung der Kommunikation einer erfindungsgemäßen Prozessanwendung mit zu prüfenden Suchfenstern, sowie
- Figur 2: eine schematische Darstellung einer Windows-Version der Prozessanwendung hinsichtlich des Zusammenwirkens der dort realisierten Threads.

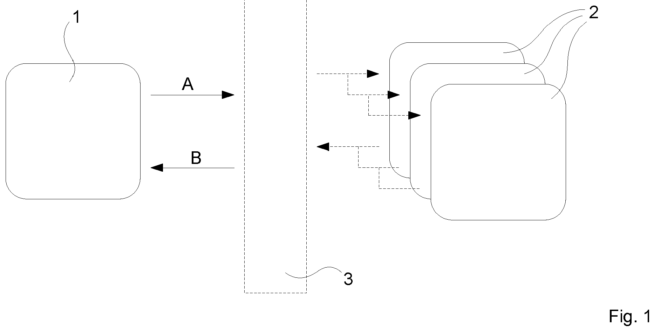

Figur 1 zeigt eine schematische Darstellung einer Prozessanwendung 1, welche aus einer oder mehreren Datenfeldern 2 relevanter Programminstanzen, welche auf einem Datenverarbeitungsgerät ausgeführt werden, eingegebene Internetadressen auslesen möchte. Die Prozessanwendung 1 sendet hierzu eine Abfrage A an die relevanten Programminstanzen, wobei diese Abfrage A unter Zwischenschaltung von Bedienungshilfefunktionen 3 mit Bezug auf die Datenfelder 2 gesendet wird. Die Bedienungshilfefunktionen 3 sind systemeigene Funktionen eines auf dem Datenverarbeitungsgerät laufenden Betriebssystem, welche verschiedene Informationen aus auf dem Datenverarbeitungsgerät, etwa einem Computer oder einem Mobilgerät, ablaufenden Applikationen auslesen kann, mit dem eigentlichen Zweck, diese Informationen für eingeschränkt sehfähige Benutzer wahrnehmbar aufzubereiten, insbesondere vorzulesen. Die Bedienungshilfefunktionen 3 lesen auf betriebssystemabhängig unterschiedliche Weise Daten aus Datenfeldern 2 relevanter Programminstanzen aus und geben diese an die Prozessanwendung 1 zurück, wobei auch eine Rückgabe der Internetadresse B stattfindet. Dieser Mechanismus erlaubt es trotz anderweitiger Restriktionen, Inhalte aus dem Datenfeld 2 auszulesen, auch wenn diese gegen Zugriffe geschützt sind.

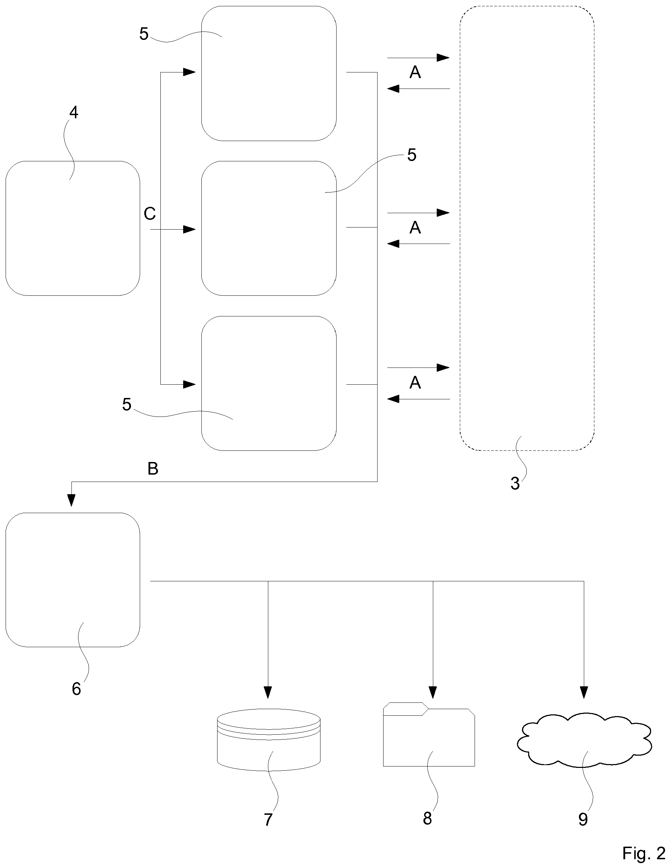

Konkret zeigt Figur 2 eine Lösung, welche für das Betriebssystem Microsoft Windows ausgestaltet ist. Dort umfasst eine Prozessanwendung 1 zunächst einen Prozessüberwachungsthread 4, welcher verschiedene relevante Programminstanz mit Datenfeldern 2 identifiziert. Zu jeder identifizierten relevanten Programminstanz erfolgt ein Start C eines Beobachtungsthreads 5. Als relevante Programminstanzen werden Instanzen von Applikationen eingestuft, welche entweder Browser sind oder aber vom Benutzer explizit angegebene Suchmaschinen-Applikationen.

Unter Beobachtung der Beobachtungsthreads 5 werden aus den Datenfeldern 2 in regelmäßigen Abständen Internetadressen ausgelesen, so dass die Suchaktivität des Benutzers nachvollzogen werden kann. Die Internetadressen werden nach dem Auslesen durch die Beobachtungsthreads 5 zur weiteren Verarbeitung an einen Verarbeitungsthread 6 weitergereicht B. Auch hier erfolgt die Abfrage A der Internetadressen unter Zuhilfenahme der Bedienungshilfefunktionen 3 des Betriebssystems. Sämtliche Beobachtungsthreads 5 liefern an einen gemeinsamen Verarbeitungsthread 6.

Der Verarbeitungsthread 6 erhält die Internetadressen, welche die Beobachtungsthreads 5 von den Bedienungshilfefunktionen 3 zurückbekommen. Zunächst wird der Verarbeitungsthread 6 prüfen, ob sich die Internetadressen von früheren Abfragen unterscheiden, um den Traffic aufgrund unnötiger Suchanfragen zu minimieren. Dann wird der Verarbeitungsthread 6 eine Suchroutine starten. Handelt es sich bei der Prozessanwendung 1 um ein Softwareentwicklungsmodul, so wird der Verarbeitungsthread die Suchanfragen an ein Interface ausgeben, insbesondere in eine Datenbank 7 speichern, eine Textausgabe 8 liefern oder gegebenenfalls auch eine selbsttätige Datenabfrage 9 durchführen und die Ergebnisse verarbeiten.

Ist die Prozessanwendung 1 in ein vollständiges System eingebettet, so wird sie eine Suchroutine starten, die auch auf einem entfernt liegenden Server ablaufen kann.

Die Suchergebnisse verarbeitet wiederum der Verarbeitungsthread 6, welcher die Suchergebnisse mit dem vom Benutzer selbst aufgerufenen Treffer vergleicht und gegebenenfalls Informationen zu den Ergebnissen der parallelen, von der Suchroutine durchgeführten selbsttätigen Datenabfrage 9 aufbereitet. Dies findet insbesondere in einem Overlay statt, das dem Benutzer in einem bestimmten Bildschirmbereich des Datenverarbeitungsgeräts dargestellt wird.

Vorstehend beschrieben sind somit ein Verfahren zur Durchführung einer selbsttätigen Datenabfrage sowie ein Programmprodukt zu dessen Ausführung, das trotz der neueren Einschränkungen hinsichtlich der Datensicherheit eine auf lange Sicht funktionale Lösung darstellt und für den Benutzer keine Einschränkungen im täglichen Gebrauch mit sich bringt.

### BEZUGSZEICHENLISTE

- 1: Prozessanwendung
- 2: Datenfeld
- 3: Bedienungshilfefunktionen
- 4: Prozessüberwachungsthread
- 5: Beobachtungsthread
- 6: Verarbeitungsthread
- 7: Datenbank
- 8: Textausgabe
- 9: selbsttätige Datenabfrage

- A: Abfrage
- B: Rückgabe der Internetadresse
- C: Start des Beobachtungsthreads

## Patentansprüche

1. Verfahren zur Durchführung einer selbsttätigen Datenabfrage zu in einem Datenfeld (2) einer relevanten Programminstanz auf einem Datenverarbeitungsgerät enthaltenen Daten, bei dem eine Internetadresse innerhalb des Datenfelds (2) einer auf dem Datenverarbeitungsgerät ausgeführten Programminstanz erfasst und an eine Suchroutine übermittelt wird, woraufhin die Suchroutine aufgrund der Internetadresse eine oder mehrere mit den Daten des Datenfeldskorrespondierende selbsttätige Datenabfragen durchführt und die Ergebnisse dieser einen oder mehreren Datenabfragen in einem hierfür bestimmten Bildschirmbereich darstellt,
**dadurch gekennzeichnet, dass** die Internetadresse in dem Datenfeld (2) mithilfe einer Prozessanwendung (1) ausgelesen wird, welche hierzu systemeigene Bedienungshilfefunktionen (3) eines auf dem Datenverarbeitungsgerät ablaufenden Betriebssystems ausführt und deren Funktionsantworten an die Suchroutine weiterleitet.

2. Verfahren gemäß einem der Ansprüche 1 oder 2, **dadurch gekennzeichnet, dass** die Suchroutine auf dem Datenverarbeitungsgerät oder auf einem über das Internet mit dem Datenverarbeitungsgerät verbundenen Server abläuft.

3. Verfahren gemäß einem der vorhergehenden Ansprüche, **dadurch gekennzeichnet, dass** die Ergebnisse der selbsttätigen Produktsuchen in einer im Bildvordergrund dargestellten Einblendung wiedergegeben werden, welche vorzugsweise in Form, Größe und Lage durch den Benutzer konfigurierbar ist.

4. Verfahren gemäß einem der vorhergehenden Ansprüche, **dadurch gekennzeichnet, dass** die Prozessanwendung (1) parallel wenigstens einen Prozessüberwachungsthread (4), wenigstens einen Beobachtungsthread (5) und wenigstens einen Verarbeitungsthread (6) implementiert, wobei der Prozessüberwachungsthread (4) geöffnete Applikationsfenster dahingehend überprüft, ob es sich um relevante Programminstanzen, insbesondere um Suchfenster, handelt und für jede relevante Programminstanz einen der betreffenden relevanten Programminstanz zugeordneten Beobachtungsthread (5) zum Auslesen von Internetadressen aus einem Datenfeld (2) der relevanten Programminstanz startet, der wenigstens eine Beobachtungsthread (5) in regelmäßigen oder unregelmäßigen Abständen Internetadressen aus dem Datenfeld (2) ausliest und die ausgelesenen Internetadressen an den Verarbeitungsthread (6) übermittelt und der Verarbeitungsthread (6) die ausgelesenen Internetadressen an die Suchroutine weitergibt und von dieser die Ergebnisse der selbsttätigen Datenabfragen erhält und diese in einem hierfür bestimmten Bildschirmbereich darstellt.

5. Verfahren gemäß Anspruch 4, **dadurch gekennzeichnet, dass** der Beobachtungsthread (5) das wenigstens eine Datenfeld (2) der ihm jeweils zugeordneten relevanten Programminstanz in regelmäßigen Abständen ausliest und die hierbei ermittelte Internetadresse mit dem vorhergehenden Ausleseergebnis vergleicht, wobei eine Weitergabe an den Verarbeitungsthread (6) oder ein erneutes Aufrufen der Suchroutine nur bei einer zwischenzeitlichen Änderung der Internetadresse seit dem vorangehenden Auslesevorgang durchgeführt wird.

6. Verfahren gemäß einem der Ansprüche 4 oder 5, **dadurch gekennzeichnet, dass** der Beobachtungsthread (5) das Datenfeld (2) der relevanten Programminstanz unter Verwendung systemeigener Bedienungshilfefunktionen (3) des auf dem Datenverarbeitungsgerät ablaufenden Betriebssystems ausliest.

7. Verfahren gemäß Anspruch 6, **dadurch gekennzeichnet, dass** es sich bei dem Betriebssystem um ein Windows-Betriebssystem handelt und der Beobachtungsthread (5) auf Funktionen der Microsoft Active Accessibility API zurückgreift, um die Internetadresse aus dem Datenfeld (2) der relevanten Programminstanz auszulesen.

8. Verfahren gemäß Anspruch 6, **dadurch gekennzeichnet, dass** es sich bei dem Betriebssystem um ein Microsoft Windows-Betriebssystem handelt und der Beobachtungsthread (5) auf Funktionen der Microsoft User Interface Automation .NET oder .COM zurückgreift, um die Internetadresse aus dem Datenfeld des Suchfensters (2) auszulesen.

9. Verfahren gemäß einem der Ansprüche 1 bis 3, **dadurch gekennzeichnet, dass** es sich bei dem Betriebssystem um ein Betriebssystem für Mobilgeräte, insbesondere ein Android- oder IOS-Betriebssystem, handelt, und die Prozessanwendung auf einen systemeigenen Bedienungshilfedienst zurückgreift, um die Internetadresse, vorzugsweise durch eine grafische Schrifterkennung, aus dem Datenfeld (2) der relevanten Programminstanz auszulesen.

10. Verfahren gemäß einem der vorhergehenden Ansprüche, **dadurch gekennzeichnet, dass** zwischen zwei Auslesevorgängen der Internetadresse aus dem Datenfeld (2) der relevanten Programminstanz eine Mindestdauer liegt, welche vorzugsweise durch den Benutzer konfigurierbar ist.

11. Verfahren gemäß einem der vorhergehenden Ansprüche, **dadurch gekennzeichnet, dass** es sich bei den relevanten Programminstanzen um Browserfenster oder Instanzen dezidierter Suchmaschinen-Apps handelt.

12. Programmprodukt zur Durchführung eines Verfahrens gemäß einem der vorhergehenden Ansprüche.

13. Programmprodukt gemäß einem der Ansprüche 11 oder 12, welches als Softwareentwicklungsmodul konzipiert ist, das auf eigene Suchroutinen verzichtet und ein Interface zur Übergabe von Suchparametern, insbesondere von ausgelesenen Internetadressen, bereitstellt, sowie vorzugsweise ein konfigurierbares Nutzerinterface umfasst.

14. Programmprodukt gemäß Anspruch 13, welches die ausgelesenen Internetadressen zur weiteren Verarbeitung in eine Datenbank (7) einträgt, als Text ausgibt (8) oder selbsttätige Datenabfragen (9) im Internet durchführt.

## Claims

1. Method for performing an automatic data request for data contained in a data field (2) of a relevant program instance on a data processor, in which an Internet address within the data field (2) of a program instance executed on the data processor is determined and is transmitted to a search routine, whereupon the search routine performs one or more automatic data requests, which correspond to the data of the data field, based on the Internet address, and displays the results of this one or more data requests in a screen region designated for this purpose,
**characterized in that** the Internet address in the data field (2) is read out with the help of a process application (1), which, for this purpose, performs native accessibility functions (3) of an operating system running on the data processor and transfers the functional responses thereof to the search routine.

2. Method according to any one of claims 1 or 2, **characterized in that** the search routine runs on the data processor or on a server, which is connected to the data processor via the Internet.

3. Method according to any one of the preceding claims, **characterized in that** the results of the automatic product searches are reproduced in a fade-in, which is displayed in the image foreground and which can preferably be configured in shape, size and position by the user.

4. Method according to any one of the preceding claims, **characterized in that** the process application (1) implements at least one process monitoring thread (4), at least one observation thread (5), and at least one processing thread (6) in parallel, wherein the process monitoring thread (4) monitors open application windows as to whether they are relevant program instances, in particular search windows, and starts an observation thread (5) assigned to the respective relevant program instances for each relevant program instance, for reading out Internet addresses from a data field (2) of the relevant program instance, said at least one observation thread (5) reads out Internet addresses from the data field (2) at regular or irregular intervals and transmits the read-out Internet addresses to the processing thread (6), and the processing thread (6) transfers the read-out Internet addresses to the search routine and receives from the latter the results of the automatic data requests, and displays them in a screen region designated for this purpose.

5. Method according to claim 4, **characterized in that** the observation thread (5) reads out the at least one data field (2) of the relevant program instance respectively assigned to it at regular intervals, and compares the Internet address determined hereby to the preceding read-out result, wherein a transfer to the processing thread (6) or a new accessing of the search routine is performed only in response to an interim change of the Internet address since the preceding read-out process.

6. Method according to any one of claims 4 or 5, **characterized in that** the observation thread (5) reads out the data field (2) of the relevant program instance using native accessibility functions (3) of the operating system running on the data processor.

7. Method according to claim 6, **characterized in that** the operating system is a Windows operating system, and the observation thread (5) resorts to functions of the Microsoft Active Accessibility API, in order to read out the Internet address from the data field (2) of the relevant program instance.

8. Method according to claim 6, **characterized in that** the operating system is a Microsoft Windows operating system, and the observation thread (5) resorts to functions of the User Interface Automation .NET or .COM, in order to read out the Internet address from the data field of the search window (2).

9. Method according to any one of claims 1 to 3, **characterized in that** the operating system is an operating system for mobile devices, in particular an Android or IOS operating system, and the process application resorts to a native accessibility service, in order to read out the Internet address, preferably by means of a graphic character recognition, from the data field (2) of the relevant program instance.

10. Method according to any one of the preceding claims, **characterized in that** a minimum duration, which can preferably be configured by the user, lies between two read-out processes of the Internet address from the data field (2) of the relevant program instance.

11. Method according to any one of the preceding claims, **characterized in that** the relevant program instances are browser windows or instances of dedicated search engine apps.

12. Program product for performing a method according to any one of the preceding claims.

13. Program product according to any one of claims 11 or 12, which is designed as software development module, which forgoes its own search routines and provides an interface for transferring search parameters, in particular read-out Internet addresses, as well as preferably comprises a configurable user interface.

14. Program product according to claim 13, which enters read-out Internet addresses for further processing into a database (7), outputs them as text (8), or performs automatic data requests (9) on the Internet.

## Revendications

1. Procédé pour la réalisation d'une requête de données automatique concernant des données contenues dans un champ de données (2) d'une instance de programme pertinente sur un appareil de traitement de données, dans lequel une adresse Internet à l'intérieur du champ de données (2) d'une instance de programme exécutée sur l'appareil de traitement de données est détectée et est transmise à une routine de recherche, la routine de recherche exécutant ensuite, sur la base de l'adresse Internet, une ou plusieurs requêtes de données automatique correspondant aux données du champ de données et présentant les résultats de cette une ou plusieurs requêtes de données dans une zone de l'écran prévue à cet effet,
**caractérisé en ce que** l'adresse Internet est lue dans le champ de données (2) au moyen d'une application de process (1) qui exécute pour cela des fonctions auxiliaires de commande (3), spécifiques au système, d'un système d'exploitation tournant sur l'appareil de traitement de données et qui transmet leurs réponses fonctionnelles à la routine de recherche.

2. Procédé selon l'une des revendications 1 ou 2, **caractérisé en ce que** la routine de recherche se déroule sur l'appareil de traitement de données ou sur un serveur relié par internet à l'appareil de traitement de données.

3. Procédé selon l'une des revendications précédentes, **caractérisé en ce que** les résultats des recherches de produits automatiques sont représentés dans un affichage représenté au premier-plan, qui peut être configuré par l'utilisateur, de préférence en ce qui concerne la forme, la taille et la position.

4. Procédé selon l'une des revendications précédentes, **caractérisé en ce que** l'application de process (1) implémente parallèlement au moins un thread de surveillance de process (4), au moins un thread d'observation (5) et au moins un thread de traitement (6), dans lequel le thread de surveillance de process (4) vérifie toutefois des fenêtres d'application afin de déterminer s'il s'agit d'instances de programmes pertinentes, plus particulièrement de fenêtres de recherche et, pour chaque instance de programme pertinente, démarre un thread d'observation (5) correspondant à l'instance de programme pertinente concernée pour la lecture des adresses Internet à partir d'un champ de données (2) de l'instance de programme pertinente, l'au moins un thread d'observation (5) lit, à des intervalles réguliers ou irréguliers, les adresses Internet provenant du champ de données (2) et les adresses Internet lues sont transmises au thread de traitement (6) et le thread de traitement (6) transmet les adresses Internet à la routine de recherche et obtient de celle-ci les résultats des requêtes de données automatiques et les présente dans une zone de l'écran prévue à cet effet.

5. Procédé selon la revendication 4, **caractérisé en ce que** le thread d'observation (5) lit l'au moins un champ de données (2) de l'instance de programme pertinente qui lui correspond à des intervalles réguliers et compare l'adresse Internet déterminée avec le résultat de lecture précédent, dans lequel une transmission au thread de traitement (6) ou un nouvel appel de la routine de recherche n'est effectué que lorsque l'adresse Internet a été modifiée entre-temps depuis le processus de lecture précédent.

6. Procédé selon l'une des revendications 4 ou 5, **caractérisé en ce que** le thread d'observation (5) lit le champ de données (2) de l'instance de programme pertinente à l'aide de fonctions auxiliaires de commande (3), spécifiques au système, du système d'exploitation tournant sur l'appareil de traitement de données.

7. Procédé selon la revendication 6, **caractérisé en ce que** le système d'exploitation est un système d'exploitation de type Windows et le thread d'observation (5) accède à des fonctions de l'API Microsoft Active Accessibility afin de lire l'adresse Internet dans le champ de données (2) de l'instance de programme pertinente.

8. Procédé selon la revendication 6, **caractérisé en ce que** le système d'exploitation est un système d'exploitation de type Microsoft Windows et le thread d'observation (5) accède à des fonctions de la Microsoft User Interface Automation .NET ou .COM afin de lire l'adresse Internet dans le champ de données (2) de l'instance de programme pertinente.

9. Procédé selon l'une des revendications 1 à 3, **caractérisé en ce que** le système d'exploitation est un système d'exploitation pour appareils mobiles, plus particulièrement un système d'exploitation de type Android ou IOS et l'application de process accède à un service auxiliaire de commande spécifique au système afin de lire l'adresse Internet, de préférence à l'aide d'une reconnaissance graphique de caractères, dans le champ de données (2) de l'instance de programme pertinente.

10. Procédé selon l'une des revendications précédentes, **caractérisé en ce que**, entre deux processus de lecture de l'adresse Internet dans le champ de données (2) de l'instance de programme pertinente, se trouve une durée minimale qui peut être configurée de préférence par l'utilisateur.

11. Procédé selon l'une des revendications précédentes, **caractérisé en ce que** les instances de programmes pertinentes sont des fenêtres de navigateurs ou des instances d'applications de moteurs de recherche dédiés.

12. Produit de programme pour l'exécution d'un procédé selon l'une des revendications précédentes.

13. Produit de programme selon l'une des revendications 11 ou 12, qui est conçu comme un module de développement de logiciel qui ne possède pas ses propres routines de recherche et qui met à disposition une interface pour le transfert des paramètres de recherche, plus particulièrement d'adresses Internet lues, et comprend de préférence une interface utilisateur configurable.

14. Produit de programme selon la revendication 13, qui entre les adresses Internet lues pour un traitement ultérieur dans une base de données (7), les sort sous forme de texte (8) ou effectue des requêtes de données automatiques (9) sur Internet.
